**Europäisches Patentamt**

(19) **European Patent Office**

**Office européen des brevets**

(11) Publication number: **0 201 223**
**B1**

(12) **EUROPEAN PATENT SPECIFICATION**

(45) Date of publication of the patent specification:
**07.03.90**

(21) Application number: **86302777.7**

(22) Date of filing: **14.04.86**

(51) Int. Cl.⁴: **B60R 13/06, E06B 7/23**

(54) **Weatherstrip.**

(30) Priority: **17.04.85 GB 8509845**

(43) Date of publication of application:
**17.12.86 Bulletin 86/46**

(45) Publication of the grant of the patent:
**07.03.90 Bulletin 90/10**

(84) Designated Contracting States:
**DE FR GB IT SE**

(56) References cited:
**DE-A- 3 230 142**
**DE-B- 1 062 558**
**DE-U- 1 864 557**
**DE-U- 8 215 352**
**FR-A- 1 050 651**
**GB-A- 1 585 974**
**US-A- 2 952 053**

**PRODUCT ENGINEERING, vol. 50, no. 1, January 1979, page 16; "Weatherstripping made from two rubbers will find auto applications"**

(73) Proprietor: **FORD MOTOR COMPANY LIMITED, Eagle Way, Brentwood Essex CM13 3BW(GB)**
(84) Designated Contracting States: **GB IT SE**

(73) Proprietor: **FORD-WERKE AKTIENGESELLSCHAFT, Ottoplatz 2 Postfach 21 03 69, D-5000 Köln 21(DE)**
(84) Designated Contracting States: **DE**

(73) Proprietor: **FORD FRANCE SOCIETE ANONYME, 344 Avenue Napoléon Bonaparte B.P. 307, F-92506 Rueil Malmaison Cedex(FR)**
(84) Designated Contracting States: **FR**

(72) Inventor: **Shayer, Michael, 27 Green Trees Avenue Cold Norton, Chelmsford Essex CM3 6JA(GB)**

(74) Representative: **Messulam, Alec Moses et al, A. Messulam & Co. 24 Broadway, Leigh on Sea Essex SS9 1BN(GB)**

## Description

This invention relates to a weatherstrip device such as is used, for example, around the edges of the doors and/or boot lids of motor vehicles to seal the doors or boot lid to the rest of the vehicle when the door is closed.

Attachment of the weatherstrip to the appropriate metal panel (hereinafter called the host panel) is conventionally done using either adhesive to glue a part of the weatherstrip to the host panel, or by incorporating in the weatherstrip a metal strip which can be clinched around the edge of the host panel.

Neither of these methods is entirely satisfactory. With both methods there is a tendency for the strip to separate from the host panel under adverse conditions. Furthermore, a strip attached using adhesive often has a poor appearance. Both methods are laborious to fit and involve additional cost in respect of the adhesive or metal insert.

It is known from DE-U 1 864 557 and according to the preamble of claim 1 to use a door or window seal which has a sealing bead and a strip retaining portion with lateral ribs. The retaining portion is inserted into a channel, and the lateral ribs are designed so that the seal can be inserted into or withdrawn from the channel.

The edge of the host panel must of course be formed in such a way as to prvide an adequate mounting surface for the weatherstrip. Two particular formations are common. Firstly, where the strip is to be glued in place, a channel may be formed at the edge of the panel to accept a strip retaining portion which is actually directly glued to the panel. In a second construction, the edge of the host panel provides a relatively thin, flat rim over which a metal clip retainer incorporated in the weatherstrip can be clinched.

According to the present invention, there is provided a weatherstrip device consisting of a weatherstrip and a component which has a channel with a retaining lip for receiving the strip, the strip having a sealing bead and a strip retaining portion, the strip retaining portion having a body and at least one primary and a plurality of secondary flexible ribs all of which extend laterally from the body, the secondary ribs having a greater lateral extent than the primary ribs, all the ribs being adapted to fold back towards the body to allow the strip retaining portion to enter the channel and then to spring out, with the primary rib engaging under the retaining lip and the secondary ribs contacting the internal side walls of the channel and the secondary ribs, when in an unstressed condition, extending generally towards the mouth of the channel and, when the strip is in place, being deformed against the side walls of the channel.

With such a weatherstrip, no adhesive or metal insert is required to be associated with the strip. Assembly of the strip to the host panel is carried out simply by pushing the strip retaining portion into the channel where it automatically seats itself. Any tendency for the strip to pull out of the channel is resisted firstly by the primary rib which engages under the retaining lip. The secondary ribs assist in preventing the strip from being pulled out of the channel because they will buckle between the rib tip and the rib root, and will thus increase the pressure exerted against the side of the channel.

The strip retaining portion preferably also includes tertiary flexible ribs which extend from the body of the strip retaining portion to contact the base of the channel in the host panel. These tertiary ribs thus ensure that the primary rib is correctly positioned relative to the shoulder of the channel.

The weatherstrip is preferably made in a single material, although the sealing bead may be formed from foamed material whilst the strip retaining portion is formed from solid material. The weatherstrip can however be formed in a single moulding process, using known techniques which allow the material in one part of the strip to be of a different composition from that in another part of the strip.

In a preferred embodiment, there is one primary rib on one side of the body of the retaining portion, one secondary rib on the same side and two secondary ribs on the opposite side of the strip retaining portion body. Two tertiary ribs can be provided.

A suitable material for the strip is EPDM rubber.

Production of a host panel with a channel around its periphery is cheaper than production of a corresponding host panel with a fully clinched edge.

The invention will now be described further, by way of example, with reference to the accompanying drawings in which:

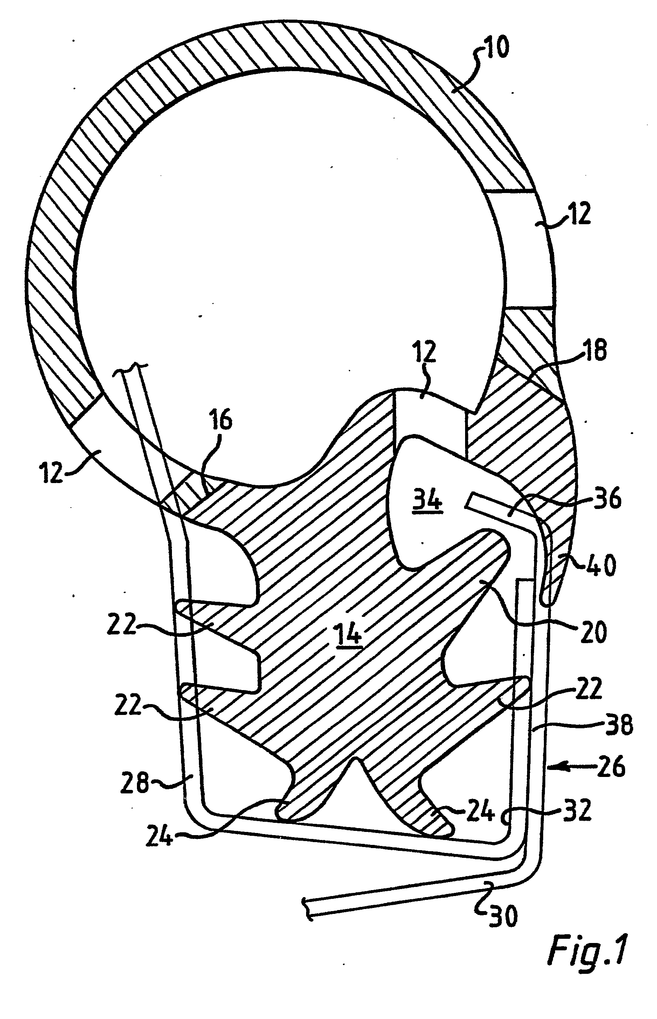

Figure 1 shows a cross section through a weatherstrip according to the invention, with the weatherstrip being shown in a relaxed condition but against the background of a suitable host panel;

Figure 2 shows the position that the ribs of the strip take up during fitting of the strip to the host panel;

Figure 3 shows the weatherstrip of Figure 1 in place 25 on a host panel; and

Figure 4 shows what happens on attempted pull-out of the strip.

Although the drawings all show a cross section through a weatherstrip in accordance with the invention, it must be appreciated that the strip is in fact an elongate strip which extends around the periphery of a host panel. However all the salient features of the strip which are important to this invention can be seen from a consideration of the strip cross-section.

The strip comprises a sealing bead 10 which is generally circular in form and hollow. Drain holes, air escape holes and mould core removal holes 12 are provided in various places around the bead periphery. The bead is formed from EPDM rubber foam.

The bead 10 is connected to a strip retaining portion 14 which has a Christmas tree formation. The strip retaining portion is formed of solid EPDM rubber, and the junction between the solid and foamed rubber regions can be seen at 16 and 18. The complete strip can however be formed in one moulding process, using known techniques.

The retaining portion 14 has one primary rib 20, three secondary ribs 22 and two tertiary ribs 24. The primary and secondary ribs are all directed laterally outwardly and towards the bead 10.

A host panel is generally indicated at 26 and comprises an inner panel 28 and an outer panel 30. Only the edges of these panels are shown, but it can be seen that they co-operate to form a channel 32 which has a mouth 34 narrower than the width of the interior of the channel. The mouth 34 is narrowed by the provision of a retaining lip 36 which is part of the outer panel 30. The inner and outer panels 28 and 30 will be secured together by spot welding between the parallel panel surfaces in the region 38. The strip itself also has an exterior lip 40.

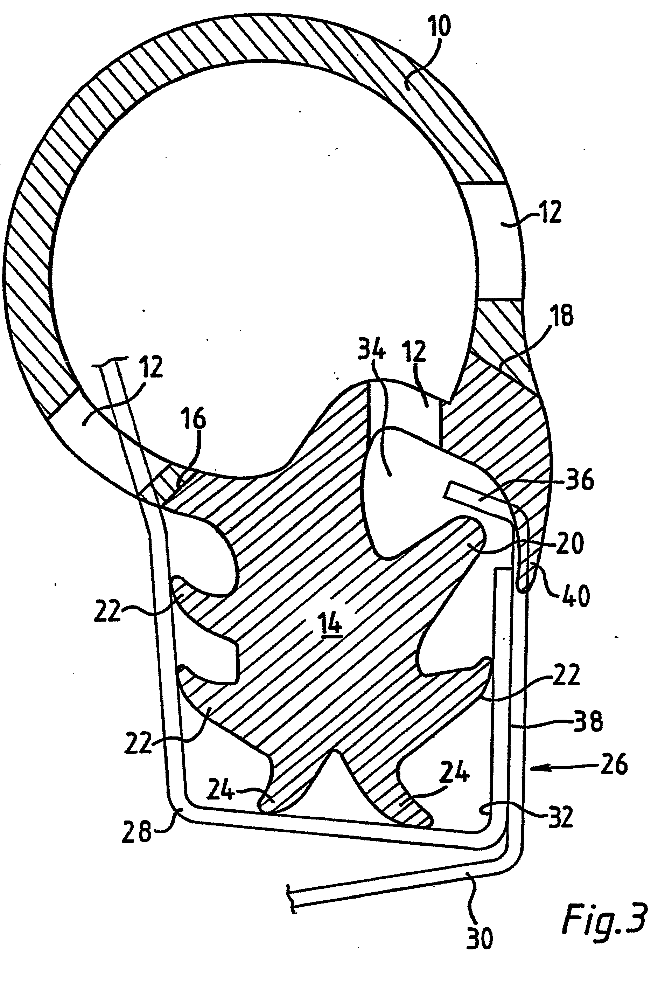

Figure 3 shows how the strip is assembled to the channel 32. The mouth of the opening 34 has a width dimension X. The relative sizes of the strip retaining portion body 14 and the ribs 20 and 22 are such that the ribs can fold inwards on insertion to achieve a dimension less than or equal to dimension X, and this can be accomplished without the use of any tools simply by pushing the strip in through the mouth 34. The ribs fold up as shown in Figure 3.

Insertion of the strip is thus easily done by simply pressing the strip into place. No additional materials are required and no tools are needed. The strip can be inserted without requiring any special skill or any particular effort.

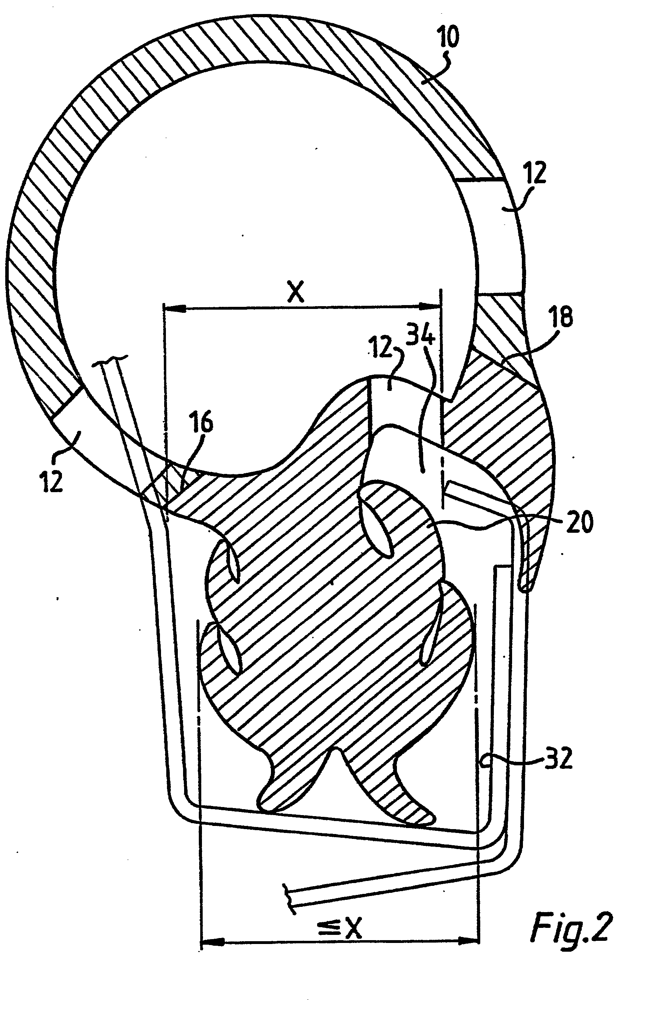

Once the ribs have passed through the opening 34, they will expand outwards again into contact with the walls of the channel as can be seen in Figure 2. The primary rib 20 is normally unstressed. No additional adhesive or any other extraneous material is needed to hold the weatherstrip in place.

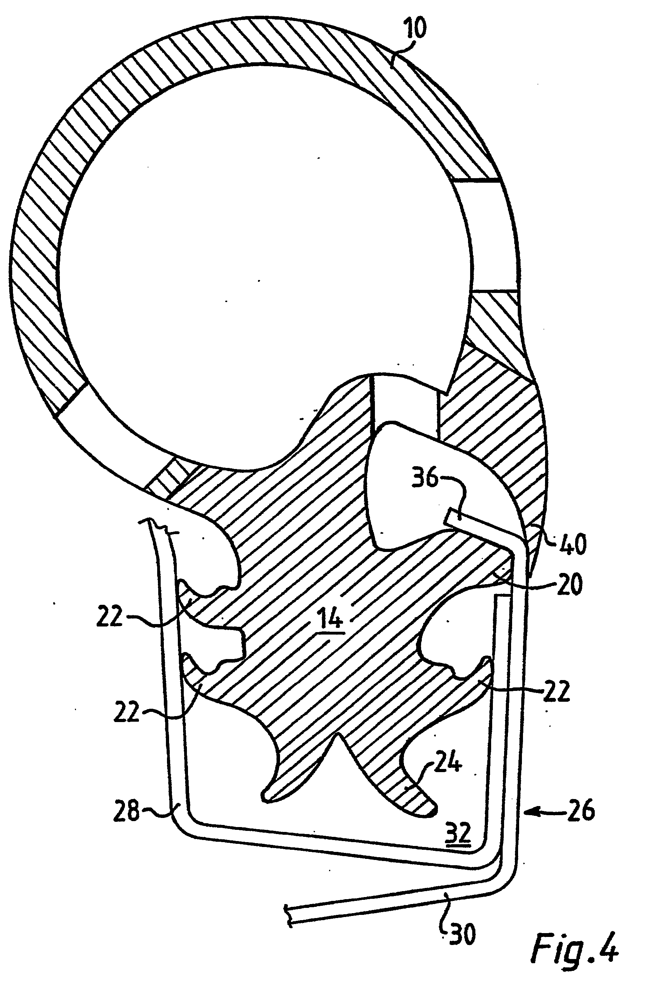

On attempted withdrawal of the weatherstrip, by pulling it out of the channel, the lip 20 will be forced against the shoulder 36. This primary rib is more substantial than the secondary ribs 22 and will provide considerable resistance to pull-out. Additionally, the ribs 22 which are pressed against the internal walls of the channel will tend to buckle as the body 14 is pulled, as shown in Figure 4, and this buckling will increase the side force exerted by the ends of the ribs 22 against the walls of the channel, thus again resisting pull-out.

The cross section of the ribs 22 and their hardness should be controlled so that the tips of the ribs will be able to fold and buckle on attempted pull-out. This is illustrated in Figure 4 where the ribs are shown in a buckled configuration, with the major resistance to pull-out coming from the abutment of the primary rib 20 against the retaining lip 36.

The tertiary ribs 24 provide flexibility for the strip to fit properly into the channel where the depth of the channel varies, for example at body feature lines on a motor vehicle body. They also help to ensure that the primary rib 20 is always enaged with the lip 36, and, in conjunction with all the other ribs, holds the weatherstrip in a stable condition within the host panel.

The lip 40 fits against the outside of the host panel in the manner shown.

## Claims

1. Weatherstrip device consisting of a weatherstrip and a component which has a channel (32) with a retaining lip (36) for receiving the strip, the strip having a sealing bead (10) and a strip retaining portion (14), the strip retaining portion (14) having a body and at least one primary (20) and a plurality of secondary (22) flexible ribs all of which extend laterally from the body, all the ribs (20, 22) being adapted to fold back towards the body to allow the strip retaining portion (14) to enter the channel (32) and then to spring out, characterised in that the secondary ribs (22) have a greater lateral extent than the primary ribs (20), the primary rib (20) engages under the retaining lip (36), and the primary (20) and secondary (22) ribs, when in an unstressed condition, extend outwardly and in the direction of the sealing bead (10) and, when the strip is in place, the secondary ribs (22) are deformed against the side walls of the channel (32).

2. A weatherstrip device as claimed in claim 1, characterised in that, on attempted pull-out of the strip from the channel (32), the secondary ribs (22) are adapted to buckle between the rib tip and the rib root, and to thus increase the pressure exerted against the side of the channel (32), and the primary rib (20) is adapted to be loaded in compression against the retaining lip (36) of the channel.

3. A weatherstrip device as claimed in Claim 1 or Claim 2, characterised in that there is one primary rib (20) on one side of the body of the retaining portion (14), one secondary rib (22) on the same side and two secondary ribs (22) on the opposite side of the strip retaining portion body.

4. A weatherstrip device as claimed in any preceding claim, characterised in that the strip retaining portion (14) also includes tertiary flexible ribs (24) which extend from the body of the strip retaining portion to contact the base of the channel (32).

5. A weatherstrip device as claimed in Claim 4, characterised in that two tertiary ribs (24) are provided.

6. A weatherstrip device as claimed in any preceding claim, characterised in that the sealing bead (10) is formed from foamed material whilst the strip retaining portion (14) is formed from solid material.

7. A weatherstrip device as claimed in Claim 6, characterised in that the weatherstrip is formed in a single moulding process.

8. A weatherstrip device as claimed in Claim 6 or 7, wherein the strip material is EPDM rubber.

## Patentansprüche

1. Dichtungsstreifen-Vorrichtung, bestehend aus einem Dichtungsstreifen und einem Bauelement mit einem U-Profil (32) mit einer Rückhaltelippe (36) zur Aufnahme des Streifens, der sich aus einem Dichtungswulst (10) und einem Streifenrückhalteteil (14) zusammensetzt, das ein Mittelstück und mindestens eine weichelastische Hauptrippe (20) sowie mehrere weichelastische Zweitrippen (22) hat, die alle seitlich aus dem Mittelstück ragen, wobei alle Rippen (20, 22) sich zum Mittelstück hin biegen lassen, damit das Streifenrückhalteteil (14) in das U-Profil (32) eingeführt werden und danach wieder zurückschnellen kann, dadurch gekennzeichnet, daß die Zweitrippen (22) eine größere seitliche Ausdehnung haben als die Hauptrippen (20), die Hauptrippe (20) unter die Rückhaltelippe (36) eingreift, die Hauptrippe (20) und die Zweitrippen (22) sich in unbelastetem Zustand nach außen und in Richtung des Dichtungswulstes (10) ausdehnen und, wenn der Streifen sich an Ort und Stelle befindet, sich die Zweitrippen (22) an den seitlichen Wänden des U-Profils (32) verformen.

2. Dichtungsstreifen-Vorrichtung nach Anspruch 1, dadurch gekennzeichnet, daß sich die Zweitrippen (22) bei dem Versuch, den Streifen aus dem U-Profil (32) herauszuziehen, zwischen der Spitze und dem Fuß der Rippe ausbeulen und somit den Druck auf die Seite des U-Profils (32) erhöhen, und die Hauptrippe (20) sich unter Druckbeanspruchung gegen die Rückhaltelippe (36) des U-Profils klemmt.

3. Dichtungsstreifen-Vorrichtung nach Anspruch 1 oder 2, dadurch gekennzeichnet, daß es eine Hauptrippe (20) auf einer Seite des Mittelstücks des Rückhalteteils (14), eine Zweitrippe (22) auf derselben Seite und zwei Zweitrippen (22) auf der gegenüberliegenden Seite des Mittelstücks des Streifenrückhalteteils gibt.

4. Dichtungsstreifen-Vorrichtung nach einem vorhergehenden Anspruch, dadurch gekennzeichnet, daß das Streifenrückhalteteil (14) auch weichelastische Drittrippen (24) enthält, die aus dem Mittelstück des Streifenrückhalteteils ragen und den Boden des U-Profils (32) berühren.

5. Dichtungsstreifen-Vorrichtung nach Anspruch 4, dadurch gekennzeichnet, daß zwei Drittrippen (24) vorhanden sind.

6. Dichtungsstreifen-Vorrichtung nach einem vorhergehenden Anspruch, dadurch gekennzeichnet, daß der Dichtungswulst (10) aus Schaumstoff und das Streifenrückhalteteil (14) aus festem Werkstoff hergestellt wird.

7. Dichtungsstreifen-Vorrichtung nach Anspruch 6, dadurch gekennzeichnet, daß der Dichtungsstreifen in einem Einfachformverfahren hergestellt wird.

8. Dichtungsstreifen-Vorrichtung nach Anspruch 6 oder 7, bei der das Streifenmaterial EPDM-Kautschuk ist.

**Revendications**

1. Dispositif à joint d'étanchéité, formé d'un joint d'étanchéité et d'un organe ayant un canal (32) muni d'une lèvre de retenue (36) et destiné à loger le joint, le joint ayant un cordon d'étanchéité (10) et une partie (14) de retenue de joint, la partie (14) de retenue de joint ayant un corps et au moins une lèvre souple primaire (20) et plusieurs lèvres souples secondaires (22) qui dépassent toutes latéralement du corps, toutes les nervures (20, 22) étant destinées à se replier contre le cordon permettant à la partie (14) de retenue du joint de pénétrer dans le canal (32) puis de se détendre élastiquement, caractérisé en ce que les nervures secondaires (22) ont une étendue latérale supérieure à celle de la nervure primaire (20), la nervure primaire (20) est au contact de la face inférieure de la lèvre de retenue (36), les nervures primaire (20) et secondaires (22), lorsqu'elles sont à l'état non déformé, dépassent vers l'extérieur et vers le cordon d'étanchéité (10), et, lorsque le joint est en place, les nervures secondaires (22) se déforment contre les parois latérales du canal (32).

2. Dispositif à joint d'étanchéité selon la revendication 1, caractérisé en ce que, lors d'une tentative d'arrachement du joint du canal (32), les nervures secondaires (22) sont adaptées pour se déformer entre l'extrémité de la nervure et son pied, et à accroître ainsi la pression exercée contre le côté du canal (32), et la nervure primaire (20) est adaptée pour être mise en compression contre la lèvre de retenue (36) du canal.

3. Dispositif à joint d'étanchéité selon la revendication 1 ou 2, caractérisé en ce qu'une nervure primaire (20) est formée sur un premier côté du corps de la partie de retenue (14), une nervure secondaire (22) est placée du même côté et deux nervures secondaires (22) sont placées du côté opposé du corps de la partie de retenue de joint.

4. Dispositif à joint d'étanchéité selon l'une quelconque des revendications précédentes, caractérisé en ce que la partie (14) de retenue du joint comporte aussi des nervures souples tertiaires (24) dépassant du corps de la partie de retenue de joint afin qu'elles soient au contact de la base du canal (32).

5. Dispositif à joint d'étanchéité selon la revendication 4, caractérisé en ce qu'il comporte deux nervures tertiaires (24).

6. Dispositif à joint d'étanchéité selon l'une quelconque des revendications précédentes, caractérisé en ce que le cordon d'étanchéité (10) est formé d'une mousse d'un matériau alors que la partie (14) de retenue du joint est formée d'un matériau plein.

7. Dispositif à joint d'étanchéité selon la revendication 6, caractérisé en ce que le joint d'étanchéité est formé en une seule opération de moulage.

8. Dispositif à joint d'étanchéité selon la revendication 6 ou 7, dans lequel le matériau du joint est un caoutchouc EPDM.

*Fig.1*

EP 0 201 223 B1

Fig.2

Fig.3

Fig.4